# EUROPEAN PATENT SPECIFICATION

(11) **EP 0 456 933 B1**
(45) Date of publication and mention of the grant of the patent: **14.06.1995**
(21) Application number: 90312104.4
(22) Date of filing: 05.11.1990
(51) Int. Cl.: B60C 9/22, B60C 9/20

(54) **Pneumatic tires for motorcycles**
Luftreifen für Motorräder
Bandage pneumatique pour motos

(30) Priority: 18.05.1990 JP 126892/90
(43) Date of publication of application: 21.11.1991
(73) Proprietor: Bridgestone Corporation, Tokyo 104 (JP)
(72) Inventor: Takase, Kiyoshi, Kodaira City, Tokyo (JP)
(74) Representative: Whalley, Kevin

(56) References cited:
- EP-A- 0 333 434
- EP-A- 0 361 871
- DE-A- 3 535 064
- GB-A- 2 157 239

## Description

This invention relates to to a pneumatic tire for motorcycles possessing good high-speed running stability, gripping property, ground contacting property and rigid feeling.

As this type of the tire, there are known pneumatic radial tires for motorcycles comprising a carcass ply comprised of organic fiber cords arranged at a cord angle of 75°-90° with respect to an equatorial plane of the tire and a belt superimposed about an outer periphery of the carcass ply and comprised of a belt layer extending in the widthwise direction of the tire and formed by spirally winding a cord having a modulus of elasticity of not less than 5884 x 10⁶Pa (600 kg/mm²), such as high modulus polyester fiber cord, polyvinyl alcohol fiber cord, rayon fiber cord, aromatic polyamide fiber cord or the like in the circumferential direction of the tire. Such a tire is disclosed for example in DE-A-3535064. In these tires, the bulging of the tread outward in the radial direction of the tire through centrifugal force during the high-speed running can be prevented by the hoop effect of the above belt formed by the spiral winding of the cord, so that the high-speed running stability is excellent. Furthermore, since the cords for the belt are aligned in the widthwise direction of the tire by spiral winding, the bending rigidity of the tread in the radial direction of the tire is small, and consequently the ground contacting property becomes excellent.

In the radial tire provided with the belt comprising a spirally wound cord layer having many advantages as mentioned above, however, the bending rigidity in the radial direction of the tire is small owing to the belt structure itself, so that laterally rigid feeling is lacking.

In order to enhance the lateral rigidity in the motorcycle tire, it is generally attempted to increase the number of plies constituting the carcass, or to extend the reinforcing member for the bead portion toward the tread end. However, in the former case, the rigidity as a whole of the tire including not only the tread but also the sidewall becomes high and particularly the rigidity of the sidewall becomes relatively high, so that it is unavoidable to degrade the gripping property and the steering property. In the latter case, the rigidity of the sidewall becomes excessively high, so that there is a problem that the gripping property and the steering property are degraded in the course of cornering.

In the motorcycle tire, the tread is continued to the sidewall at a considerable curvature, which is different from the tread of a four-wheeled tire, so that the tread width contacting the ground during the running is about 1/3 of the full tread width at most, so that the tread of the motorcycle tire possesses not only a function of gripping road surface but also a function serving as a sidewall. With the foregoing in mind, the present invention aims to provide a pneumatic tire for motorcycles having improved gripping property and rigid feeling while maintaining the advantages of high-speed running stability and the ground contacting property when using a belt comprised of spirally wound cord.

Attention is also drawn to the disclosure of GB-A-2157239.

According to the invention, there is provided a pneumatic tire for motorcycles comprising a tread, a pair of sidewalls each toroidally extending from a side end of the tread, a carcass comprised of at least one ply containing organic fiber cords arranged at a cord angle of 75°-90° with respect to an equatorial plane of the tire and turned around a bead ring embedded in a radially inward portion of the sidewall from inside of the tire toward outside thereof, and a belt arranged between the tread and the carcass and comprised of at least two cord layers, characterized in that at least an innermost cord layer of the belt located at a carcass side contains cords arranged at a cord angle of 40°-90° with respect to the equatorial plane of the tire, and at least one cord layer located at a tread side contains a cord spirally wound in the circumferential direction of the tire and extending in the widthwise direction of the tire over substantially the full width of the tread, and a widthwise end of at least one cord layer inclusive of the innermost cord layer located at the carcass side is located within a region ranging from a position corresponding to approximately 70% of a tread width to a position extending from a tread end to 1/2 of a sidewall height.

In a preferred embodiment of the invention, a plurality of cord layers are located at the carcass side in the belt and cords of these layers are crossed with each other with respect to the equatorial plane of the tire.

The invention will be described with reference to the accompanying drawings, wherein:

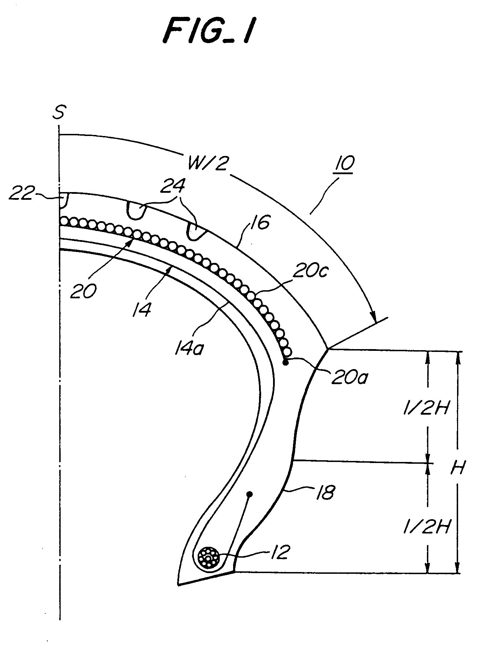

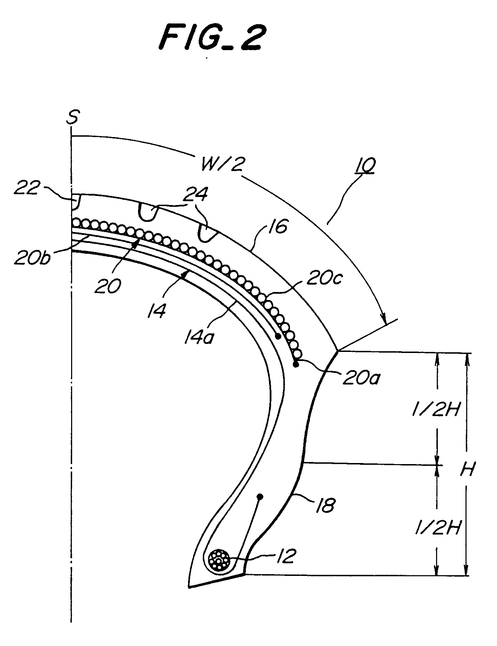

Figs. 1 and 2 are schematically radial section views of embodiments of pneumatic radial tires according to the invention, respectively.

In the pneumatic motorcycle tire according to the invention, the bulging of the tread outward in the radial direction of the tire is restrained by the cord layer for the belt, which is located at the tread side and formed by spirally winding the cord in the circumferential direction of the tire, so as to extend in the widthwise direction of the tread, and also the rigidity of the tread in the lateral direction of the tire is given by the cord layer for the belt located at the carcass side and containing cords arranged at a cord angle of 40°-90° with respect to the equatorial plane of the tire while maintaining elastically flexible feeling of the sidewall, so that the gripping property and the rigid feeling can be improved without damaging the high-speed running stability and the ground contacting property.

Furthermore, the rigidity of the tread can be more enhanced while maintaining the elastically flexible feeling of the sidewall by crossing the cords of the plurality of cord layers located at the carcass side with each other.

Preferred embodiments of pneumatic tires for motorcycles according to the invention will be described in detail with reference to the accompanying drawings.

In Fig. 1 is schematically shown a right-half section of a first preferred embodiment of a pneumatic tire for motorcycles according to the invention with respect to an equatorial plane S-S of the tire. Of course, the tire 10 is substantially symmetric with respect to the equatorial plane S-S.

A carcass 14 is wound around each of a pair of annular bead cores 12 from the inside of the tire toward the outside thereof and comprised of at least one rubberized ply 14a containing organic fiber cords such as nylon fiber cords, polyester fiber cords, rayon fiber cords, high-modulus polyester fiber cords or the like arranged at a cord angle of 75°-90° with respect to the equatorial plane S-S. In the illustrated embodiment, the carcass 14 is comprised of one rubberized carcass ply containing nylon cords of 1260 d/2. A tread 16 forming a ground contacting portion of the tire is toroidally connected at each of its side ends to sidewalls 18, and a belt 20 comprised of two cord layers is arranged between the tread 16 and the carcass 14. Moreover, numerals 22 and 24 are grooves 16 formed in the tread 16.

In the illustrated embodiment, the belt 20 is comprised of a cord layer 20a located at the carcass side and a cord layer 20c located at the tread side. The cord in the cord layer 20a is selected from nylon fiber cord, polyester fiber cord, high-modulus polyester fiber cord, polyvinyl alcohol fiber cord and aromatic polyamide fiber cord, preferably nylon fiber cord, and is arranged at a cord angle of 40°-90° with respect to the equatorial plane S-S.

Furthermore, the cord layer 20a has such a width that a widthwise end of the cord layer 20a is located within a region ranging from a position corresponding to approximately 70% of a width (W) of the tread 16 to a position extending from a tread end to 1/2 of a height (H) of the sidewall 18.

The reason why the position of the widthwise end of the cord layer 20a is limited to the above region is due to the fact that the lateral rigidity of a portion ranging from the tread 16 to the sidewall 18 is enhanced uniformly without losing the elastically flexible feeling of the sidewall 18. Particularly, when the elastically flexible feeling of the sidewall 18 is required, the width of the cord layer 20a is sufficient to be approximately equal to 70% of the width (W) of the tread 16. If the width is less than approximately 70% of the tread width, the rigidity of the tread 16 lowers and consequently the desired rigid feeling is lost. On the other hand, when the widthwise end of the cord layer 20a located at the bead core side exceeds 1/2 of the height (H) of the sidewall 18, the elastically flexible feeling of the sidewall 18 is lost.

The cord layer 20c located at the tread side is comprised of an organic fiber cord having a high modulus of elasticity, such as high-modulus polyester fiber cord, polyvinyl alcohol fiber cord, rayon fiber cord or aromatic polyamide fiber cord having a modulus of elasticity of not less than 5884 x 10⁶Pa (600 kg/mm²), which is spirally wound outside the cord layer 20a and extended in the widthwise direction of the tire. The cord layer 20c acts to suppress the bulging of the carcass 14 and the cord layer 20a outward in the radial direction of the tire and prevents the motion of the tread 16 in the radial direction to reduce the heat generation of the tire, whereby the high-speed running is made possible and also the given tread pattern is maintained to improve the gripping property of the tire. By such a construction of the belt, the rigidity in the lateral direction of the tire is enhanced without increasing the carcass ply number and also the elastically flexible feeling of the sidewall can substantially be maintained, so that the ground contacting property of the tread is not degraded.

In Fig. 2 is schematically shown a right-half radial section of a second embodiment of a motorcycle pneumatic tire according to the invention. Moreover, the same parts of the tire as in Fig. 1 are represented by the same numerals as in Fig. 1.

The tire of the illustrated embodiment has substantially the same structure as in the embodiment of Fig. 1 except that the belt 20 located between the tread 16 toroidally connecting to the sidewalls 18 and the carcass 14 is comprised of three cord layers.

That is, the belt 20 is comprised of two cord layers 20a and 20b located at the carcass side and a cord layer 20c located at the tread side. The cords of the cord layers 20a and 20b located at the carcass side are arranged at a cord angle of 40°-90° with respect to the equatorial plane S-S of the tire, respectively.

Even in this embodiment, either one of the cord layers 20a and 20b, particularly the cord layer 20a in the illustrated embodiment, has such a width that the widthwise end is located within a region ranging from a position corresponding to approximately 70% of a width (W) of the tread 16 to a position extending from a tread end to 1/2 of a height (H) of the sidewall 18. Thus, the lateral rigidity of a portion ranging from the tread 16 to the sidewall 18 can be enhanced uniformly without losing the elastically flexible feeling of the sidewall 18.

Of course, the widths of both the cord layers are made equal to each other within the above region, if necessary, or the width of the cord layer 20b can be selected so as to satisfy the position of the widthwise end within the aforementioned region. When the number of cord layers located at the carcass side is 3 or more, it is sufficient that the widthwise end of at least one cord layer is located within the above region. In these cord layers, the cords are crossed with each other with respect to the equatorial plane of the tire. Moreover, when the cord angle is 90° with respect to the equatorial plane, the cords of these cord layers may be aligned in the same direction.

In the embodiment of Fig. 2, the cord layer 20c arranged outside the cord layers 20a and 20b and at the tread side is comprised of cord spirally wound in the circumferential direction and extending in the widthwise direction in the same manner as in the embodiment of Fig. 1 and has a width approximately equal to the tread width W, whereby the bulging of the tread outward in the radial direction of the tire can effectively be prevented. Moreover, the number of cord layers located at the tread side and constituted by spiral winding of the cord may be two or more, if necessary.

The following example is given in illustration of the invention and is not intended as a limitation thereof.

### Example

The high-speed running stability, gripping property, ground contacting property and rigid feeling were evaluated by using four invention tires and two comparative tires as follows.

### Dimensions of test tire

- Size:: MCR 150/60 R17
- Carcass:: single ply containing nylon-6,6 cords of 1260d/2 arranged at a cord angle of 90° with respect to the equatorial plane of the tire

### Invention tire A:

This tire had a structure shown in Fig. 2, in which each of two cord layers located at the carcass side contained nylon-6,6 cords of 840d/2 arranged at a cord angle of 75° with respect to the equatorial plane of the tire so as to cross cords of these layers with each other, and the width of the innermost cord layer was equal to the tread width (W) and the width of the cord layer adjacent thereto was 0.9 times the tread width (W), and the cord layer located at the tread side was comprised of Kevlar (trade name) cord of 1500d/2 spirally wound in the circumferential direction substantially in parallel to the equatorial plane and had a width corresponding to 0.95 times the tread width (W).

### Invention tire B:

This tire had the same structure as the invention tire A except that the two cord layers located at the carcass side had a cord angle of 60° with respect to the equatorial plane of the tire.

### Invention tire C:

This tire had a structure shown in Fig. 1, in which the cord layer located at the carcass side contained nylon-6,6 cords of 840d/2 arranged at a cord angle of 60° with respect to the equatorial plane of the tire and had a width equal to the tread width (W), and the cord layer located at the tread side was comprised of Kevlar (trade name) cord of 1500d/2 spirally wound in the circumferential direction substantially in parallel to the equatorial plane and had a width corresponding to 0.95 times the tread width (W).

### Invention tire D:

This tire had the same structure as the invention tire C except that the width of the cord layer located at the carcass side was 0.8 times the tread width (W).

### Comparative tire 1:

This tire had the same structure as the invention tire C except that the width of the cord layer located at the carcass side was 0.6 times the tread width (W).

### Comparative tire 2:

This tire was provided with a belt of a single cord layer comprised of Kevlar (trade name) cord of 1500d/2 spirally wound in the circumferential direction substantially in parallel to the equatorial plane and having a width equal to the tread width (W).

### Test method

A front tire having a tire size of 110/70 R17 and comprising a carcass comprised of two rubberized plies each containing nylon-6,6 cords of 840 d/2 arranged at a cord angle of 75° with respect to the equatorial plane, cords of which plies being crossed with each other, and a belt comprised of two cord layers each containing Kevlar cords of 1500 d/2 arranged at a cord angle of 22° with respect to the equatorial plane, cords of which layers being crossed with each other and widths of which layers being 97% of tread width at the tread side and 82% thereof at the carcass side, was mounted on a front wheel of a test motorcycle and each of the above test tires was mounted on a rear wheel of the same test motorcycle. Then, the motorcycle was actually run on road, during which the high-speed running stability, gripping property, ground contacting property and rigid feeling were measured at ten-point stage by feeling test to obtain results as shown in the following Table 1, in which the larger the numerical value, the better the property.

**Table 1**

| | High-speed running stability | Gripping property | Ground contacting property | Rigid feeling |
|---|---|---|---|---|
| Invention tire A | 8 | 8 | 7 | 8 |
| Invention tire B | 7 | 8 | 6 | 9 |
| Invention tire C | 8 | 8 | 7 | 8 |
| Invention tire D | 8 | 7 | 7 | 7 |
| Comparative tire 1 | 8 | 6 | 7 | 6 |
| Comparative tire 2 | 8 | 7 | 8 | 6 |

As seen from Table 1, the high-speed running stability and the gripping property are not degraded, and the rigidity can be enhanced while controlling the ground contacting property at minimum in the invention tires A to D as compared with the comparative tires 1 and 2.

Moreover, the invention is not limited to the above embodiments and various modifications may be made within the scope of the invention. For example, a plurality of carcass plies may be used in accordance with the specification of the tire, or a plurality of cord layers each comprised of spirally wound cord extending in the widthwise direction of the tire over the full width of the tread may be arranged. Moreover, the motorcycle pnuematic tire according to the invention can be applied to either a front wheel or a rear wheel or both of a motorcycle.

As mentioned above, the invention can provide pneumatic tires for motorcycles having improved rigid feeling without losing the high-speed running stability and the gripping property.

## Claims

1. A pneumatic tire (10) for motorcycles comprising a tread (16), a pair of sidewalls (18) each toroidally extending from a side end of the tread, a carcass (14) comprised of at least one ply (14a) containing organic fiber cords arranged at a cord angle of 75°-90° with respect to an equatorial plane (S-S) of the tire and turned around a bead ring (12) embedded in a radially inward portion of the sidewall from the inside of the tire toward the outside thereof, and a belt (20) arranged between the tread and the carcass and comprised of at least two cord layers, characterized in that at least an innermost cord layer (20a) of the belt located at a carcass side contains cords arranged at a cord angle of 40°-90° with respect to the equatorial plane of the tire, and at least one cord layer (20c) located at a tread side contains a cord spirally wound in the circumferential direction of the tire and extending in the widthwise direction of the tire over substantially the full width of the tread, and a widthwise end of at least one cord layer inclusive of the innermost cord layer (20a) located at the carcass side is located within a region ranging from a position corresponding to approximately 70% of a tread width (W) to a position extending from a tread end to 1/2 of a sidewall height (H).

2. A pneumatic tire for motorcycles as claimed in claim 1, characterized in that a plurality of cord layers (20a, b) are located at the carcass side in the belt and cords of these layers are crossed with each other with respect to the equatorial plane of the tire.

## Patentansprüche

1. Luftreifen (10) für Motorräder, mit einer Lauffläche (16), zwei Seitenwänden (18), die sich jeweils von einem Seitenrand der Lauffläche toroidförmig erstrecken, einer Karkasse (14), die aus mindestens einer Lage (14a) besteht, die Cordfäden aus organischer Faser enthält, die unter einem Cordfadenwinkel von 75°-90° bezüglich der Äquatorebene (S-S) des Reifens angeordnet sind, wobei diese Karkasse von der Innenseite nach der Außenseite des Reifens um einen Wulstring (12) geschlungen ist, der in einen radial inneren Bereich der Seitenwand eingebettet ist. und mit einem Gürtel (20), der zwischen der Lauffläche und der Karkasse angeordnet ist und aus mindestens zwei Cordschichten besteht, dadurch gekennzeichnet, daß mindestens eine auf der Karkassenseite gelegene, innerste Cordschicht (20a) des Gürtels Cordfäden enthält, die unter einem Cordfadenwinkel von 40°-90° bezüglich der Äquatorebene des Reifens angeordnet sind, und mindestens eine auf der Laufflächenseite gelegene Cordschicht (20c) einen in der Umfangsrichtung des Reifens spiralförmig aufgewickelten Cordfaden enthält, und sich in der Breitenrichtung des Reifens über im wesentlichen die volle Breite der Lauffläche erstreckt, und ein Seitenrand von mindestens einer Cordschicht, einschließlich der auf der Karkassenseite gelegenen, innersten Cordschicht (20a) innerhalb eines Gebietes liegt, das von einer Position, die ungefähr 70% der Laufflächenbreite (W) entspricht, bis zu einer Position reicht, die der halben Höhe einer Seitenwand (H) ab dem Laufflächenrand entspricht.

2. Luftreifen für Motorräder gemäß Anspruch 1, dadurch gekennzeichnet, daß eine Vielzahl von Cordschichten (20a, b) auf der Karkassenseite in dem Gürtel angeordnet ist, und die Cordfäden dieser Schichten bezüglich der Äquatorebene des Reifens sich überkreuzen.

## Revendications

1. Bandage pneumatique (10) pour motos, comprenant une bande de roulement (16), une paire de flancs (18) s'étendant chacun en une forme toroïdale depuis une extrémité latérale de la bande de roulement, une carcasse (14) comprenant au moins une nappe (14a) contenant des câblés en fibres organiques arrangés en formant un angle de câblé de 75° -90° par rapport au plan équatorial (S-S) du bandage pneumatique et retournée autour d'une tringle de talons (12) enrobée dans une portion interne du flanc en direction radiale depuis le côté interne du bandage pneumatique en direction de son côté externe, et une ceinture (20) arrangée entre la bande de roulement et la carcasse, et comprenant au moins deux couches de câblés, caractérisé en ce qu'au moins la couche de câblés (20a) de la ceinture la plus à l'intérieur, située du côté de la carcasse contient des câblés arrangés en formant un angle de câblé de 40°-90° par rapport au plan équatorial du bandage pneumatique et au moins une couche de câblé (20c) située du côté de la bande de roulement contient un câblé enroulé en spirale en direction circonférentielle du bandage pneumatique et s'étendant sur la largeur du bandage pneumatique en recouvrant essentiellement toute la largeur de la bande de roulement, et une extrémité en largeur d'au moins une couche de câblés, y compris la couche de câblés (20a) la plus à l'intérieur située du côté de la carcasse, est disposée dans une zone s'étendant depuis une position correspondant à approximativement 70% de la largeur de bande de roulement (W) jusqu'à une position s'étendant depuis une extrémité de la bande de roulement jusqu'à la 1/2 de la hauteur de flanc (H).

2. Bandage pneumatique pour motos selon la revendication 1. caractérisé en ce que plusieurs couches de câblés (20a, b) sont situées du côté carcasse dans la ceinture et les câblés de ces ceintures se croisent mutuellement par rapport au plan équatorial du bandage pneumatique.
